(19) Europäisches Patentamt
European Patent Office
Office européen des brevets

(11) **EP 3 171 530 A1**

(12) **EUROPEAN PATENT APPLICATION**

(43) Date of publication:
**24.05.2017 Bulletin 2017/21**

(51) Int Cl.:
*H04B 10/079* (2013.01)          *H04J 14/02* (2006.01)

(21) Application number: **16197930.7**

(22) Date of filing: **09.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.11.2015 JP 2015227264**

(71) Applicant: **FUJITSU LIMITED**
**Kawasaki-shi Kanagawa 211-8588 (JP)**

(72) Inventors:
• **Yamauchi, Tomohiro**
**Kanagawa, 211-8588 (JP)**
• **Oda, Shoichiro**
**Kanagawa, 211-8588 (JP)**
• **Nakagawa, Goji**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTICAL TRANSMISSION APPARATUS, NETWORK CONTROL APPARATUS, AND OPTICAL TRANSMISSION SYSTEM**

(57)    An optical transmission apparatus includes a first optical transmission line through which the signal of the first channel pass, the signal having a signal quality at a first strength and; an optical receiver configured to receive, from a network control apparatus, information about a second strength based on a signal quality of a signal of a second channel passing through a second optical transmission line of which at least a portion is a same as that of the signal of the first channel; and an optical transmitter configured to transmit the signal of the first channel at the second strength.

FIG. 1

EP 3 171 530 A1

**Description**

FIELD

The embodiments discussed herein are related to an optical transmission apparatus, a network control apparatus, and an optical transmission system.

BACKGROUND

A wavelength division multiplexing (WDM) transmission scheme by which various pieces of information are transmitted by multiplexing a plurality of channels is applied to various optical transmission systems of a network.

The current network has a complex configuration being complicated in a mesh shape and thus a plurality of paths for reaching an optical transmission apparatus of a reception destination from an optical transmission apparatus of a transmission source often exist. For that reason, a plurality of detour paths during failure or a plurality of paths in a channel addition are often considered.

There is a method for measuring a quality of an optical signal in a path to a destination for the addition or switching of a channel using a test signal when adding or switching the channel.

For example, there is a method for measuring a quality of an optical signal of a test signal in a channel of a switching destination using the test signal when switching of a channel being operated is performed in the WDM transmission scheme in the network formed of a plurality of optical transmission apparatuses (for example, Japanese Laid-open Patent Publication No. 2001-244900).

In the future, as a method for making a network capacity larger or the like, for example, a method for narrowing a spacing of channels multiplexed in the WDM transmission scheme is considered.

Due to an increase of the network capacity, a signal of a channel to be added or a signal of a channel of which a path is switched influences a signal of the channel already being operated by a nonlinear optical effect or the like and degrades an optical signal quality of a signal of the channel being operated.

In the conventional WDM transmission scheme, as described above, although the optical signal quality is taken into account for the signal of the channel to be added or the signal of the channel of which the path is switched, degradation of an optical signal quality on the channel being operated due to an influence of a signal of the channel to be added is not taken into account.

The optical signal quality of the signal of the channel being operated is degraded due to the influence of the signal of the channel to be added or the signal of which the path is switched and thus, a problem that an optical transmission apparatus terminating the signal of the channel being operated is not able to receive an optical signal having an optical signal quality equal to or greater than a predetermined degree occurs.

Accordingly, when the channel is added or switched, a signal of a channel to be added and a signal of the operating channel which will pass through a transmission line of the channel to be added have to be considered in a channel addition method.

The present disclosure has been made in view of such problems and intends to provide an optical transmission apparatus, a network control apparatus, and an optical transmission system that allow the channel to be added and the channel being operated to be used in the network at a predetermined optical signal quality.

SUMMARY

According to an aspect of the invention, an optical transmission apparatus includes a first optical transmission line through which the signal of the first channel pass, the signal having a signal quality at a first strength and; an optical receiver configured to receive, from a network control apparatus, information about a second strength based on a signal quality of a signal of a second channel passing through a second optical transmission line of which at least a portion is a same as that of the signal of the first channel; and an optical transmitter configured to transmit the signal of the first channel at the second strength.

BRIEF DESCRIPTION OF DRAWINGS

FIG. 1 is a diagram illustrating a configuration example of a network;
FIG. 2 is a diagram illustrating a configuration example of a network control apparatus;
FIG. 3 is a diagram illustrating a configuration example of an optical transmission apparatus;
FIG. 4 is a flowchart illustrating an example of operations when the optical transmission apparatus receives a control signal from a network control apparatus;

FIGs. 5A and 5B are diagrams illustrating an example of a relationship between an adding-channel and an operational channel in Embodiment 1;

FIGs. 6A and 6B are diagrams illustrating an example of an arrangement of the adding-channel and the operational channel in Embodiment 1;

FIGs. 7A through 7F are diagrams illustrating an example of a method for obtaining a strength limit value of an adding-channel in a case where the adding-channel influences the operational channel;

FIG. 8 is a graph illustrating an example of strength setting of the adding-channel in Embodiment 1;

FIG. 9 is a flowchart illustrating an example of determination of the strength setting of the adding-channel;

FIGs. 10A and 10B are diagrams illustrating an example of a relationship between an adding-channel and an operational channel in Embodiment 2;

FIGs. 11A through 11C are diagrams illustrating an example of an arrangement of the adding-channel and the operational channel in Embodiment 2;

FIG. 12 is a graph illustrating an example of strength setting of the adding-channel in Embodiment 2;

FIGs. 13A and 13B are diagrams illustrating an example of a relationship between an adding-channel and an operational channel in Embodiment 3;

FIGs. 14A and 14B are diagrams illustrating an example of an arrangement of the adding-channel and the operational channel in Embodiment 3;

FIG. 15 is a graph illustrating an example of strength setting of the adding-channel in Embodiment 3;

FIGs. 16A and 16B are diagrams illustrating an example of a relationship between an adding-channel and an operational channel in Embodiment 4;

FIGs. 17A through 17C are diagrams illustrating an example of an arrangement of the adding-channel and the operational channel in Embodiment 4;

FIG. 18 is a graph illustrating an example of strength setting of the adding-channel in Embodiment 4; and

FIG. 19 is a graph illustrating another example of strength setting of the adding-channel in Embodiment 4.

DESCRIPTION OF EMBODIMENTS

Hereinafter, description will be made on exemplary embodiments of the disclosed technique with reference to the accompanying drawings.

Embodiment 1

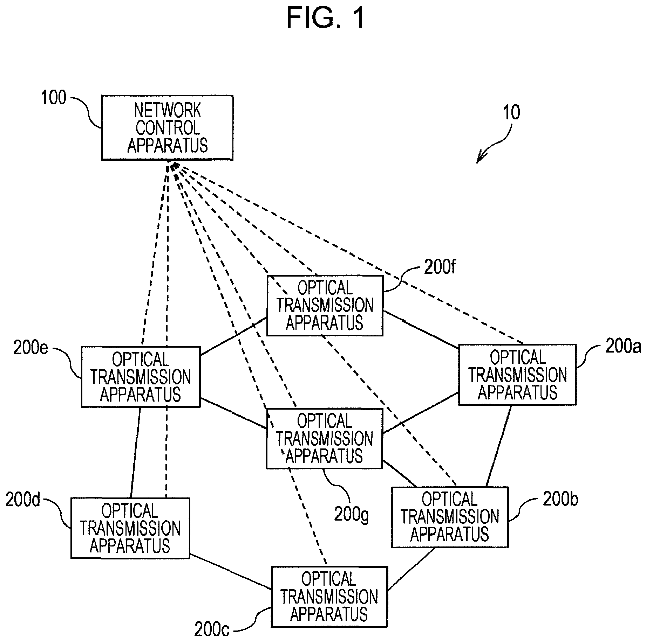

First, a configuration of a network 10 will be described. An example of the configuration of the network 10 is illustrated in FIG. 1. The network 10 includes a network control apparatus 100 and optical transmission apparatuses 200a, 200b, 200c, 200d, 200e, 200f, and 200g. The optical transmission apparatuses 200a, 200b, 200c, 200d, 200e, 200f, and 200g are simply denoted by an optical transmission apparatus 200 when are not distinguished. The number of optical transmission apparatuses 200 is not limited to the number of those illustrated in FIG. 1, and a plurality of optical transmission apparatuses may be included in the network.

The network control apparatus 100 transmits information such as control information to each optical transmission apparatus 200. The network control apparatus 100 receives information such as an optical signal quality of a signal, which is received by a certain optical transmission apparatus 200 received from another optical transmission apparatus 200, from each optical transmission apparatus 200. The optical signal quality is a bit error rate (BER), an optical signal to noise ratio (OSNR) or the like.

The optical transmission apparatus 200 transmits a signal of a target channel based on the control information received from the network control apparatus 100. The optical transmission apparatus 200 transmits a measured value of the signal of each channel, the optical signal quality of the reception signal, or the like to the network control apparatus 100.

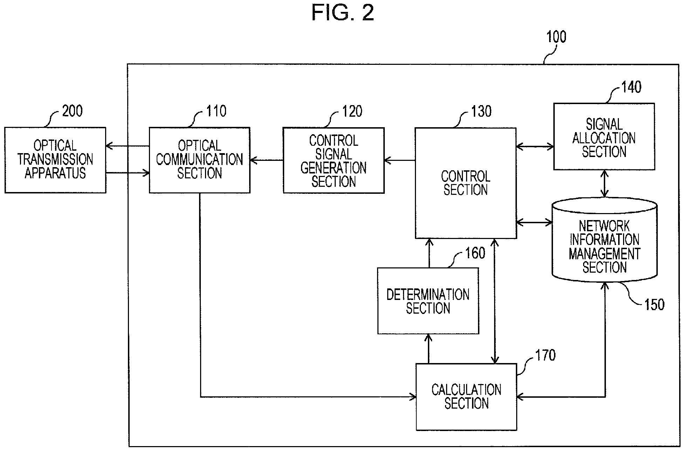

An example of a configuration of functional block diagram of the network control apparatus 100 is illustrated in FIG. 2. The network control apparatus 100 includes an optical communication section 110, a control signal generation section 120, a control section 130, a signal allocation section 140, a network information management section 150, a determination section 160, and a calculation section 170.

The optical communication section 110 transmits a control signal generated by the control signal generation section 120 to the optical transmission apparatus 200 of a destination.

The optical communication section 110 receives a measured value of the signal of each channel, the optical signal quality of the reception signal, or the like from the optical transmission apparatus 200. The optical communication section 110 may be constituted with an optical transmitter and an optical receiver. A plurality of optical communication sections 110 may also be included.

The control signal generation section 120 generates a control signal addressed to the optical transmission apparatus 200 of the target such that probe light (test signal) is generated to a newly allocated channel (adding-channel) according to control from the control section 130. The control signal generation section 120 generates a control signal containing information about a measurement for transmitting to the optical transmission apparatus 200 of the reception destination of the signal of the operational channel influenced by the signal of the adding-channel or the signal of the adding-channel according to the control from the control section 130.

The control signal generation section 120 may transmit a control signal (a known signal is transmitted) obtained by not covering a signal of the measurement target channel with information or the like in order to perform the measurement to the optical transmission apparatus 200 of the transmission source of the signal of an operational channel influenced by an adding-channel.

The operational channel indicates a channel used for each transmission line within the network 10. In the network 10, a channel not used in a transmission line between respective optical transmission apparatuses 200 is regarded as a non-operational channel. The adding-channel is a channel changed from the non-operational channel to the operational channel in a certain transmission line.

The signal of the measurement target channel is the signal of the channel influenced by the signal of the adding-channel of the signals of the operational channel. The signal of the measurement target channel is described as the signal of the measurement target channel only when intending to distinguish the signal of the measurement target channel from the signal of other operational channels. A determination method of the signal of the measurement target channel will be described later.

The control signal generation section 120 is constituted with an integrated circuit, for example, an application specific integrated circuit (ASIC) or a field programmable gate array (FPGA).

The control section 130 controls the signal allocation section 140 to determine the adding-channel. When information of the adding-channel is sent from the signal allocation section 140, the control section 130 controls the control signal generation section 120 to generate the control signal addressed to respective optical transmission apparatuses 200 of a transmission source or a reception destination of a channel related to the measurement based on operational channel information of the network 10 stored in the network information management section 150.

The control section 130 controls the control signal generation section 120 to store the noise quantity calculated by the calculation section 170 or the received optical signal quality in the network information management section 150 and change the strength of the signal of the adding-channel again and measure the strength again based on a determination result of the determination section 160 in a case where signals of all measurement target channels fall within a predetermined optical signal quality. The noise quantity will be described later.

In a case where any of the signals of the measurement target channels do not fall within the predetermined optical signal quality based on the determination result of the determination section 160, the control section 130 ends measurement and calculation. The control section 130 may also store the information such as the noise quantity or the optical signal quality when the measurement is ended.

The control section 130 may determine the maximum strength to be measured and end the measurement and calculation regardless of the determination result of the determination section 160 when the strength reaches the maximum strength.

The control section 130 may notify the calculation section 170 to perform calculation of a cumulative total of the noise quantities or the like according to a state of a network.

The control section 130, for example, is implemented by causing a central processing unit (CPU) to control respective functions.

The signal allocation section 140 may decide an adding-channel changed from the non-operational channel to the operational channel in a certain transmission line based on information of the network information management section 150 according to control of the control section 130.

The signal allocation section 140 may be implemented by causing the CPU to execute a predetermined program, for example.

The network information management section 150 is provided with the information of an operational channel for each transmission line, values of the noise quantity calculated by the calculation section 170, or the like. The network information management section 150 may be divided into separate parts to separately include the operational channel information, the noise quantity, or the like.

The information of the network information management section 150 is stored in a storage device, for example, a semiconductor memory element such as a random access memory (RAM), a read only memory (ROM), a flash memory, or the like, a hard disk, an optical disk, or the like.

The determination section 160 determines whether the optical signal quality, which is used for calculation by the calculation section 170 and sent from the optical transmission apparatus 200, is greater than or equal to a predetermined value and notifies the determination result, the noise quantity calculated by the calculation section, the received optical signal quality, or the like to the control section 130.

The calculation section 170 calculates information about the network 10 based on the optical signal quality, which is received by the optical communication section 110 and sent from the optical transmission apparatus 200. For example, the calculation section 170 calculates the noise quantity from the BER, the OSNR or the like. The calculation section 170 calculates an increase or decrease in the noise quantity accompanied by changes in strength through a plurality of times of measurement. The calculation section 170 notifies the determination section 160 of the calculated result or the like.

When a notification to perform the calculation of a cumulative noise quantity or the like from the control section 130 is received, the calculation section 170 calculates a cumulative noise quantity or the like based on the associated information stored in the network information management section 150.

The noise quantity is, for example, a noise calculated from an inverse number of the OSNR of the signal of the operational channel. When the strength of the signal of the adding-channel is increased, a difference between an inverse number of the OSNR after the increase and an inverse number of the OSNR before the increase is obtained and thus, an increment of the noise quantity accompanied by the increase is able to be measured.

An example of a noise quantity difference calculation method will be described. For example, a noise quantity $P_{Noise}(P_0, P_1)$ which is a difference $\Delta$ of the noise quantity generated when the strength of the adding-channel is increased from a strength $P_0$ to a strength $P_1$ is represented as (Equation 1) using a strength $P_{sig}$ of the operational channel.

$$\text{(Equation 1)} \quad P_{Noise}(P_0,P_1)/P_{sig} = OSNR(P_1)^{-1} - OSNR(P_0)^{-1}$$

The $OSNR(P_1)^{-1}$ and the $OSNR(P_0)^{-1}$ are represented as (Equation 2) using the noise quantity $P_{Noise}(P_1)$ and $P_{Noise}(P_0)$.

$$\text{(Equation 2)} \quad OSNR(P_1)^{-1} = P_{Noise}(P_1)/P_{sig} \quad OSNR(P_0)^{-1} = P_{Noise}(P_0)/P_{sig}$$

As described above, the difference between the inverse numbers of the OSNR before and after the change in strength of the adding-channel is calculated to calculate the noise quantity added to the change in the strength of the operational channel or the change in the strength of the adding-channel. The OSNR may be calculated from the measured BER.

The determination section 160 and the calculation section 170 may be implemented by causing the CPU to execute a predetermined program, for example.

Description will be made on a process during which the adding-channel is determined in the network control apparatus 100 and the control signal is transmitted to the optical transmission apparatus 200.

First, when it is determined that a channel is to be added in a transmission line between optical transmission apparatuses 200, the control section 130 notifies optical transmission apparatuses 200 which are a transmission source and a reception destination of the channel to be added to the signal allocation section 140.

In the determination of addition of the channel, a request signal is transmitted from the optical transmission apparatus 200 to the network control apparatus 100. The network control apparatus 100 may determine the addition of the channel based on a condition of the network 10.

The signal allocation section 140 detects an operational channel in a transmission line of the channel to be added from the network information management section 150, determines an adding-channel from non-operational channels, and notifies the control section 130 of the adding-channel. The signal allocation section 140 may also set the adding-channel to a position at which influence by the adding-channel becomes smaller using arrangement information of the operational channel of the network information management section 150.

The control section 130 controls the control signal generation section 120 to generate the control signal to the optical transmission apparatus 200 of the transmission source of the adding-channel.

The control signal generation section 120 generates the control signal of which destination is the optical transmission apparatus 200 of the transmission source of the adding-channel according to control of the control section 130 and causes the control signal to be transmitted from the optical communication section 110 to the optical transmission apparatus 200.

The control signal containing the information of the channel, which is generated by the control signal generation section 120, to be measured in each optical transmission apparatus 200 and measured at each channel is transmitted from the optical communication section 110 to the optical transmission apparatus 200 of a termination (reception) destination of the signal of the adding-channel and a termination (reception) destination of the signal of the measurement target channel. Regardless of the influence by the adding-channel, the control signal may be transmitted to the optical transmission apparatus 200 of the termination side of the signal of the channel which passes through even a portion of the transmission line through which the signal of the channel to be added passes.

For example, in the network 10 as illustrated in FIG. 1, in a case where a channel extending from the optical transmission apparatus 200a to the optical transmission apparatus 200c is added, when the adding-channel is determined, the control signal is transmitted to respective optical transmission apparatuses 200 at a side where the measurement target channel, which is an operational channel influenced by the adding-channel in at least one of the transmission lines between the optical transmission apparatuses 200a and 200b and the optical transmission apparatuses 200b and 200c, is terminated and the optical transmission apparatus 200a, which is to be added, of the transmission source.

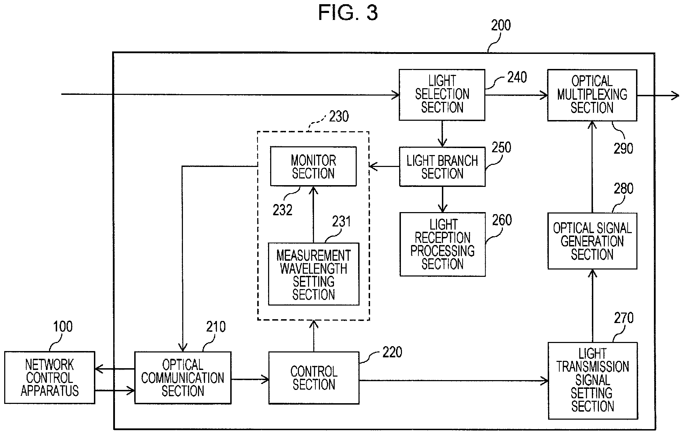

Next, a configuration example of a functional block diagram of the optical transmission apparatus 200 is illustrated in FIG. 3. The optical transmission apparatus 200 includes an optical communication section 210, a control section 220, a measurement section 230, a light selection section 240, a light branch section 250, a light reception processing section 260, a light transmission signal setting section 270, an optical signal generation section 280, and an optical multiplexing section 290.

The optical communication section 210 notifies the control section 220 of a control signal received from the network control apparatus 100.

The optical communication section 210 transmits the measured result of the signal measured by the measurement section 230 to the network control apparatus 100.

The control section 220 uses the control signal relating to the transmission of the control signal sent from the optical communication section 210 in the control of the light transmission signal setting section 270. The control section 220 uses the control signal relating to the measurement (reception side) of the control signals sent from the optical communication section 210 in the control of the measurement section 230.

The measurement section 230 measures a signal of a target channel of the signals branched by the light branch section 250. The measurement section 230 notifies the optical communication section 210 of the measured result. The measurement section 230 includes a measurement wavelength setting section 231 and a monitor section 232.

The measurement wavelength setting section 231 sets an optical channel to be measured by the optical transmission apparatus 200 from the control signal of the reception side sent from the control section 220. The measurement wavelength setting section 231 may be configured to route the optical channel to be measured to the light branch section 250 from the light selection section 240 based on the control signal.

The measurement wavelength setting section 231 may be configured to include, for example, a wavelength variable filter, a wavelength selection switch, or the like.

The monitor section 232 measures the optical signal quality of the channel which is set by the measurement wavelength setting section 231.

The monitor section 232 may be constituted with a photodiode (PD) and an analog digital converter, for example.

The light reception processing section 260 may measure the optical signal quality of the signal of the channel, which is terminated, as the optical receiver of the optical communication section 110 instead of the monitor section 232. In a case where the light reception processing section 260 (optical receiver) is used, the control signal modulated with various modulation schemes is able to be subjected to the reception process.

The light selection section 240 divides the wavelength multiplex signal transmitted from another optical transmission apparatus 200 into the signal of the channel to be terminated and the signal of the channel not to be terminated by the optical transmission apparatus 200 of its own. The signal of the channel not to be terminated is sent to the optical multiplexing section 290 and the signal of the channel to be terminated is sent to the light reception processing section 260 side.

The light selection section 240 is constituted with, for example, a wavelength selection switch.

The light branch section 250 branches the channel of the side to be terminated and selected by the light selection section 240 into a channel for measurement and a channel for termination.

The light branch section 250 may be provided ahead of the light selection section 240 to branch the signal which is not yet selected by the light selection section 240.

The light branch section 250 is constituted with an optical splitter, for example.

The light reception processing section 260 performs signal processing on the signal of the channel to be terminated by the optical transmission apparatus 200 of its own through photoelectric conversion.

The light reception processing section 260 is constituted with an integrated circuit or the like, for example, the photodiode, the ASIC, the FPGA or the like.

The light transmission signal setting section 270 sets a signal to be transmitted from the optical transmission apparatus 200 of its own according to the control of the control section 220.

The light transmission signal setting section 270 may be implemented by causing the CPU to execute a predetermined program, for example.

The optical signal generation section 280 generates the probe light in the position of the adding-channel based on the control information sent from the light transmission signal setting section 270. The optical signal generation section 280 generates signal light even regarding the operational channel of which the transmission source is the optical transmission apparatus 200. The optical signal generation section 280 applies modulation to the signal light generated by the optical transmission apparatus 200 based on the settings of the light transmission signal setting section 270.

The optical signal generation section 280 is constituted with, for example, a light emitting device such as a laser diode (LD) and a modulator.

The optical multiplexing section 290 multiplexes the signal of the channel, which is not terminated by the optical transmission apparatus 200, of the signals branched by the light selection section 240 and the signal of the channel generated by the optical signal generation section 280 or the like.

The optical multiplexing section 290 is constituted with, for example, an arrayed waveguide grating (AWG).

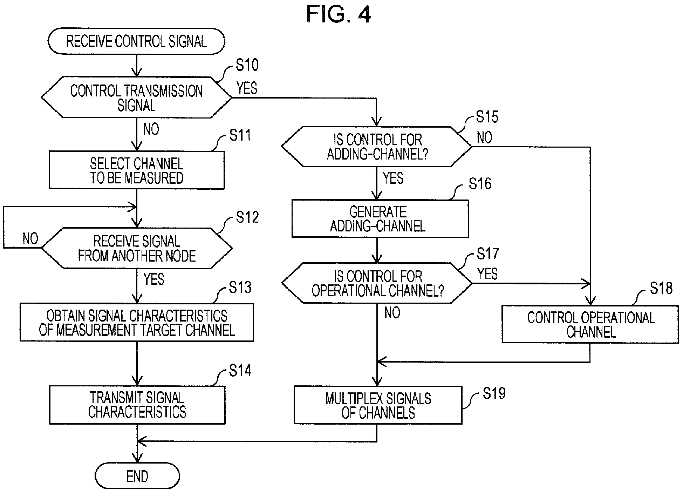

Description will be made on a case where the optical transmission apparatus 200 receives a control signal from the network control apparatus 100 using an example of a flowchart of FIG. 4. In FIG. 4, description has been made in consideration of control for both the operational channel and the adding-channel.

When the optical communication section 210 receives a control signal from the network control apparatus 100, the control section 220 examines whether the control signal is for a reception side control or a transmission side control (Step S10). In a case where the control signal is for the reception side control (S10: No), the measurement wavelength setting section 231 selects a channel to be measured by the optical transmission apparatus 200 based on the control signal in the measurement section 230 (Step S11).

When the channel is selected, it is examined whether a signal is received from another optical transmission apparatus 200 (Step S12). In a case where the signal is not received (S12: No), it goes to a waiting state until the signal is received.

When the signal is received from another optical transmission apparatus 200 (S12: Yes), the optical signal quality of the signal of the target channel is obtained by the monitor section 232 (Step S13). The obtained result is transmitted to the network control apparatus 100 from the optical communication section 210 (Step S14), and the process is ended.

In a case where the control signal transmitted from the network control apparatus 100 is the control signal for the transmission side (S10: Yes), it is determined whether the control in the control signal by the control section 220 targets the adding-channel (Step S15).

In a case where the adding-channel is determined as a target (Step S15: Yes), the channel is set by the light transmission signal setting section 270, the optical signal generation section 280 generates probe light in the channel (Step S16), and applies modulation on the generated probe light to generate the signal of the adding-channel. The control section 220 examines whether control information of the operational channel is contained in the control signal (Step S17).

The determinations as to whether the adding-channel is a target channel for control of the light transmission signal setting section 270 (S15 and S17) may be performed simultaneously and determination on one of S15 and S17 may be performed first and then determination on the other may be performed.

In a case where the adding-channel is not determined as a target in Step S15 (Step S15: No) or in a case where control information of the operational channel is contained in the control signal in Step S17 (Step S17: Yes), the optical signal generation section 280 generates signal light to the target of the operational channel (Step S18).

In a case where the adding-channel is not determined as a target in Step S15 (Step S15: No), processing of Step S17 may be performed. In a case of the flowchart of FIG. 4, control information for transmission is examined first (Step S10) and thus, when one channel (adding-channel) is not the target, the other channel (operational channel) becomes the target.

After processing of Step S18 or when it is determined that the control information of the operational channel is not contained in the control signal in Step S17 (Step S17: No), the signals of the channels are multiplexed by the optical multiplexing section 290 (Step S19) and output from the optical transmission apparatus 200, and the process illustrated is ended. When the signal of another channel is sent from the light selection section 240, the signal is multiplexed with the signal of the channel generated by the optical signal generation section 280 in processing of Step S19 and is output.

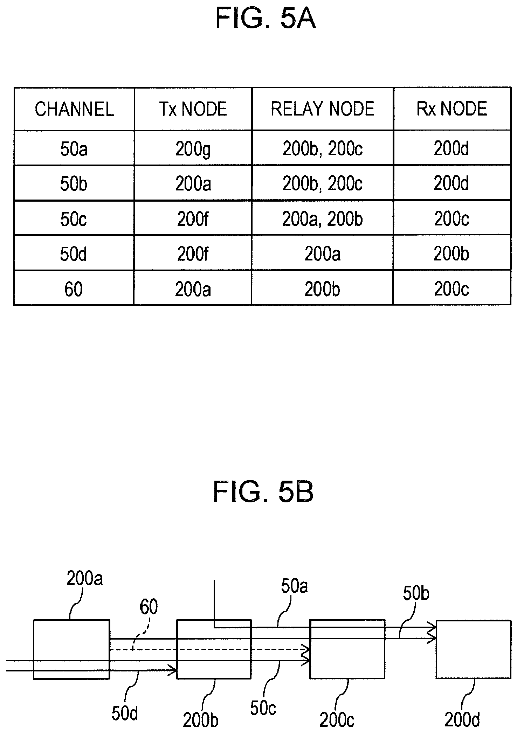

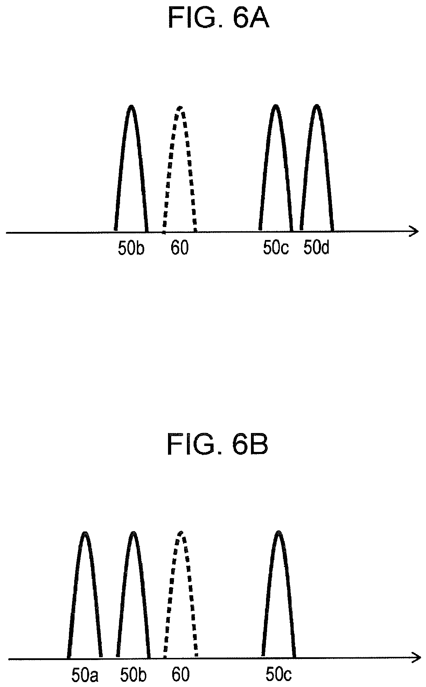

Next, an example of a relationship between the operational channel and the adding-channel in a certain transmission line between the optical transmission apparatuses 200 is illustrated in FIGs. 5A and 5B and FIGs. 6A and 6B.

FIG. 5A is an example of a diagram in which an optical transmission apparatus 200 (Tx node), which inserts signal light into the operational channels 50a, 50b, 50c, and 50d and the adding-channel 60 which pass through any of a transmission line between the optical transmission apparatus 200a and the optical transmission apparatus 200b and a transmission line between the optical transmission apparatus 200b and the optical transmission apparatus 200c and transmits the signal light, an optical transmission apparatus 200 (relay node) which relays the signal light, and a relay device 200 (Rx node) which receives (terminates) the signal in the network 10 are illustrated. The operational channels 50a, 50b, 50c, and 50d are simply denoted by an operational channel 50 when the operational channels are not distinguished.

The pieces of operational channels of FIG. 5A are accumulated in the network information management section 150.

FIG. 5B illustrates a transmission line when a signal is generated in the operational channel 50 and the adding-channel 60 to be transmitted in a state of FIG. 5A between the optical transmission apparatus 200a and the optical transmission apparatus 200d in the network 10.

FIG. 6A is a diagram illustrating an arrangement of signals of respective operational channels 50 and a signal of the adding-channel 60 in the transmission line between the optical transmission apparatus 200a and the optical transmission apparatus 200b in FIG. 5B.

FIG. 6B is a diagram illustrating an arrangement of signals of respective operational channels 50 and a signal of the adding-channel 60 in the transmission line between the optical transmission apparatus 200b and the optical transmission apparatus 200c in FIG. 5B.

Here, description will be made on a measurement target channel determination method.

When the adding-channel 60 is determined, a signal is generated and transmitted to the adding-channel 60 and the operational channel 50, of which the transmission line is the same as at least a portion of the transmission line through which the adding-channel 60 passes. In the optical transmission apparatus 200 terminating the signal of the operational channel 50, the signal of the operational channel 50 influenced by the optical signal quality such as the BER or OSNR of the received signal of the operational channel 50 resulted in an increment of a predetermined value or more is detected and is regarded as a measurement target channel.

The determination of the measurement target channel may be performed by the optical transmission apparatus 200 side and presence/absence of a target may be transmitted from the optical transmission apparatus 200 to the network control apparatus 100. The information of the optical signal quality may be transmitted from the optical transmission apparatus 200 to the network control apparatus 100 and the network control apparatus 100 may determine presence/absence of a target.

As described above, the signal of the operational channel 50 being influenced is determined for the signal of the adding-channel 60 to determine the measurement target channel. The strength of the signal of the adding-channel 60 at that time is regarded as a strength exhibiting the influence (by the adding-channel), for example, the strength that the signal of the adding-channel 60 exceeds a predetermined BER by self phase modulation or the maximum value of the predetermined measurement strength.

In a case where measuring of a range being influenced is not performed, a signal of the channel which passes through the transmission line, which is the same even as a portion of transmission line through which the signal of the channel to be added, may be regarded as the signal of the measurement target channel.

A range being influenced may be determined in advance. For example, the channel within predetermined spacing may also be regarded as the measurement target channel to measure the signal of the measurement target channel.

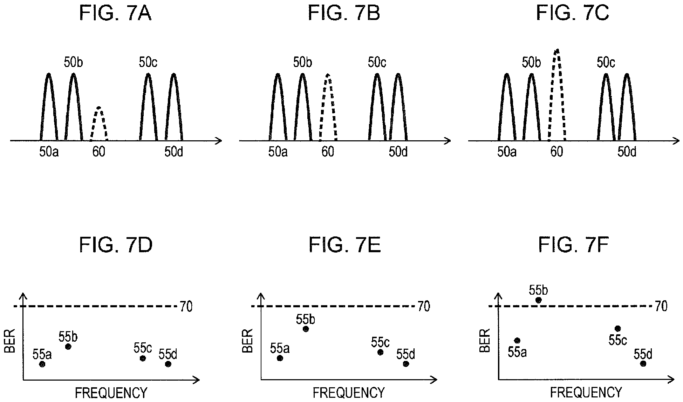

When the measurement target channel is determined in the adding-channel 60, influence by each strength of the signal of the adding-channel 60 (increase or decrease of the BER or the noise quantity or the like) is examined to determine a strength limit value of the signal of the adding-channel 60. An example of a strength limit value measurement method will be described using FIGs. 7A through 7C.

FIGs. 7A through 7C illustrate an example in which the strength of the signals of the adding-channel 60 is changed in the signals of the adding-channel 60 and the signals of the operational channel 50 used in FIGs. 5A and 5B and FIGs. 6A and 6B. FIGs. 7D through 7F are diagrams in which the BERs, which correspond to the signals of the operational channels 50a, 50b, 50c, and 50d corresponding to FIGs. 7A through 7C, are indicated as BERs 55a, 55b, 55c, and 55d, respectively. The BERs 55a, 55b, 55c, and 55d are simply denoted by a BER 55 when the BERs are not distinguished.

Although the channel arrangement of FIGs. 7A through 7C is illustrated by combining the transmission lines between the optical transmission apparatus 200a and the optical transmission apparatus 200c, the influence on the signal of the operational channel 50 by the signal of the adding-channel 60 is exerted only on the same section. For example, in a case of the arrangement of FIGs. 6A and 6B, the signal of the operational channel 50a is influenced by the adding-channel 60 only in the transmission line between the optical transmission apparatus 200a and the optical transmission apparatus 200b.

An allowable limit BER 70 is described as an allowable limit of the optical signal quality.

The allowable limit BER 70 is, for example, a value satisfying the BER desired for a communication standard. The optical signal quality, for example, the OSNR may be used as a reference instead of the allowable limit BER 70.

The BER 55 when a signal is generated in the adding-channel 60 by weak probe light in FIG. 7A is illustrated in FIG. 7D. In this case, all BERs 55 are fallen within a range less than or equal to the allowable limit BER 70 and thus the strength of the signal of the adding-channel 60 is increased and the strength is measured again as illustrated in FIG. 7B.

Also, in FIG. 7E corresponding to FIG. 7B, all BERs 55 are fallen within the range less than or equal to the allowable limit BER 70 and thus the strength of the signal of the adding-channel 60 is increased and the strength is measured again.

In FIG. 7F corresponding to FIG. 7C, the BER 55b exceeds the allowable limit BER 70. As a result, the signal of the adding-channel 60 is not able to be used in the strength used in FIG. 7C and thus, the strength of the signal of the adding-channel 60 in FIG. 7B just before FIG. 7C becomes a strength limit value.

The measurement of the strength limit value is not limited thereto and may be measured in an understandable way.

The determination as to whether the allowable limit BER 70 is exceeded or not is performed by the determination section 160 and the BER 55 is stored in the network information management section 150 in respective strengths up to the strength limit value. Other than the BER 55, the increase or decrease in the noise quantity accompanied by the change in the strength of the adding-channel 60 is calculated by the calculation section 170 and is stored. Information other than the noise quantity or the BER 55 is also measured, calculated, and stored in the network information management section 150 as occasion calls.

Although all signals of the operational channel 50 are measured, the signal of the measurement target channel described above may be determined in advance and only the signal of the measurement target channel may be measured.

When the detection and measurement of the optical signal quality or the like for each strength until the strength reaches the strength limit value of the signal of the adding-channel 60 is completed, the measurement is ended.

Next, description will be made on a strength determination method of the signal of the adding-channel 60 based on the detection and the measured result.

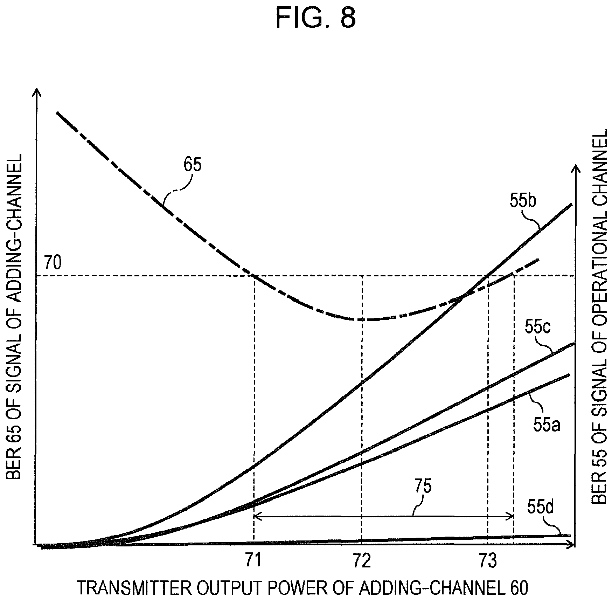

FIG. 8 is an example illustrating a change of the BER 55 and the BER 65, which is the BER of the signal of the adding-channel 60, accompanied by the change in the strength of the signal of the adding-channel 60. An influence on the signal of the adding-channel 60 by the signal of the operational channel 50 is taken into account in the BER 65 of FIG. 8. Although the signal of the operational channel 50 is also influenced by other signals of the operational channel 50, a portion, which is influenced by other operational channel, of the signal of the operational channel 50 is included in the BER 55 as being taken into before the channel is added.

In FIG. 8, a range 75 in which BER 65 becomes less than or equal to the allowable limit BER 70 is determined and the minimum allowable strength that the strength of the signal of the adding-channel 60 becomes the minimum strength within the range 75 is regarded as a strength 71. The range 75 may not be determined.

A strength 72 which is an ideal strength of the signal of the adding-channel 60 within the range 75, which becomes less than or equal to the allowable limit BER 70, is determined. In FIG. 8, a position of the minimum BER 65 is defined as the strength 72 but may also be changed by a condition to be obtained within the range 75, which becomes less than or equal to the allowable limit BER 70 without being limited thereto.

The strength of the signal of the adding-channel 60, which exceeds an allowable limit BER 70 of the BER 55, for the first time is regarded as a strength 73 which is the maximum allowable strength in the signal of the operational channel 50 (in a case of FIG. 8, a contacting point of the BER 55b and the allowable limit BER 70).

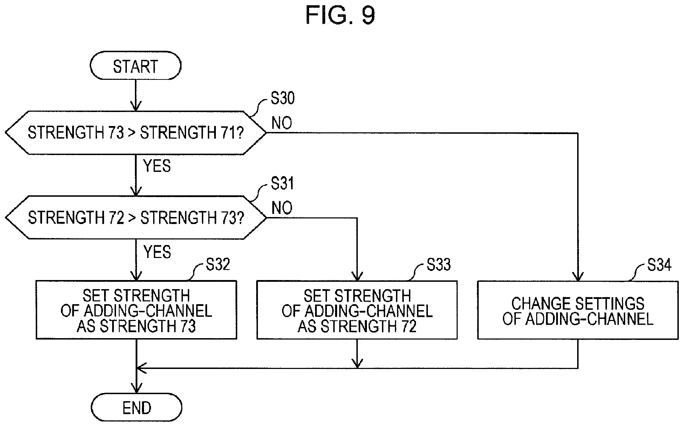

An example of a method for setting a strength for operating the signal of the adding-channel 60 using the strengths 71, 72, 73 determined based on the BER 55 and the BER 65 is illustrated by the flowchart in FIG. 9.

When the strengths 71, 72, are 73 are determined, it is examined whether the strength 73 is greater than the strength 71 (Step S30). In a case where the strength 73 is greater than the strength 71 (Step S30: Yes), it is examined whether the strength 72 is greater than the strength 73 (Step S31).

In a case where the strength 72 is greater than the strength 73 (Step S31: Yes), the strength of the signal of the adding-channel 60 is set to the strength 73 (Step S32) and the setting of the strength is ended.

In a case where the strength 72 is less than or equal to the strength 73 (Step S31: No), the strength of the signal of the adding-channel 60 is set to the strength 72 (Step S33) and the setting of the strength is ended.

In a case where the strength 73 is less than or equal to the strength 71 (Step S30: No), the adding-channel 60 is not allowed to be added and settings other than the strength of the signal is transmitted to the signal allocation section 140 to be changed (Step S34) and is ended.

For example, in the arrangement of FIGs. 6A and 6B, in a case where the strength 73 is less than or equal to the strength 71, the position of the adding-channel 60 is changed to a position located between the adding-channel 60 and the operational channel 50c in Step S34 and the strength of the signal is measured again.

As described above, when a channel to be operated is added in the network 10, the setting of strength for operating the signal of the adding-channel 60 becomes possible within the range in which the signal of the operational channel 50 and the signal of the adding-channel 60 do not exceed a value such as a predetermined the BER or the like in consideration of the influence on the signal of the operational channel 50 by the signal of the adding-channel 60.

The noise quantity and the allowable limit strength are measured in advance to increase the strength of the signal so as to allow the strength to be changed within the limit value in a case where input power to the transmission line is further desired after the adding-channel 60 is added to thereby make it possible to cope with as quickly as possible.

When the channel is to be further added after adding the adding-channel 60, the strength is also able to be adjusted from the measured noise quantity.

Although the calculation of the noise quantity is performed in the network control apparatus 100, the noise quantity may also be calculated in each optical transmission apparatus 200.

Matters relating to measurement and setting in the adding-channel are described but not limited thereto, and similar method may be used in the measurement performed even when the transmission line of the signal of the channel being operated is switched.

Embodiment 2

In Embodiment 1, performing the measurement of the BER 55 or the like in a case of a single adding-channel 60 and setting of the signal strength of the adding-channel 60 have been described. In Embodiment 2, setting of the signal strength of the adding-channel 60 in a case where the plurality of adding-channels 60 exist in a certain transmission line between the optical transmission apparatuses 200 will be described. In Embodiment 2, it is regarded that the adding-channel 60 does not pass through the transmission line between the same optical transmission apparatuses 200.

In Embodiment 2, similar to Embodiment 1, the network 10, the network control apparatus 100, and the optical transmission apparatus 200 are used.

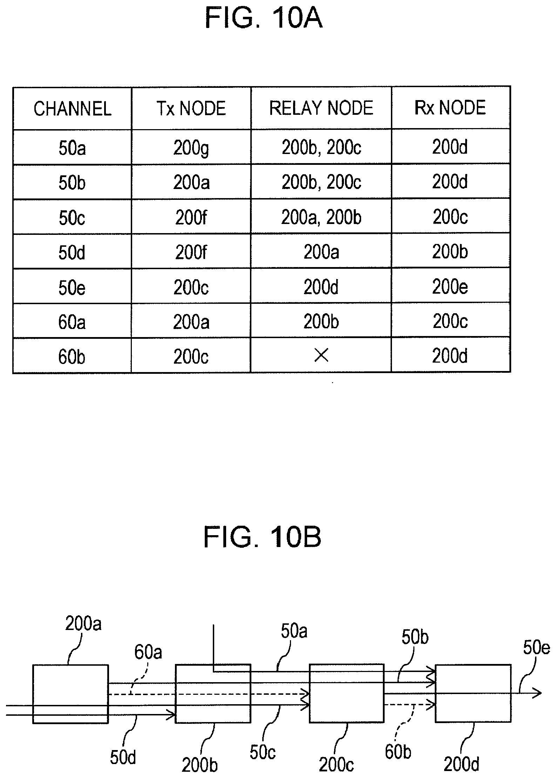

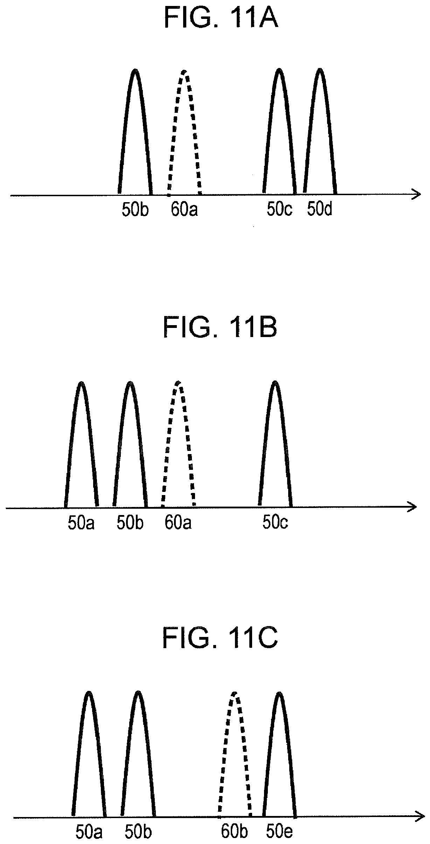

As an example of Embodiment 2, examples of the relationship between the operational channel 50 and the adding-channel 60 in a certain transmission line between the optical transmission apparatuses 200 are illustrated in FIGs. 10A and 10B and FIGs. 11A through 11C.

FIG. 10A is an example of a diagram in which an optical transmission apparatus 200 (Tx node), which transmits the signals of the operational channels 50a, 50b, 50c, 50d, and 50e and the signals of the adding-channels 60a and 60b which pass through any of a transmission line between the optical transmission apparatus 200a and the optical transmission apparatus 200b, a transmission line between the optical transmission apparatus 200b and the optical transmission apparatus 200c and a transmission line between the optical transmission apparatus 200c and the optical transmission apparatus 200d, an optical transmission apparatus 200 (relay node) which relays the signals, and a relay device 200 (Rx node) which receives (terminates) the signal in the network 10 are illustrated. When the operational channels 50a, 50b, 50c, 50d, and 50e and the adding-channels 60a and 60b are simply denoted by an operational channel 50 and the adding-channel 60, respectively when the operational channels and the adding-channels are not distinguished, respectively.

FIG. 10B is a diagram illustrating a transmission line when a signal is generated and transmitted to the operational channel 50 and the adding-channel 60 in a state of FIG. 10A between the optical transmission apparatus 200a and the optical transmission apparatus 200d in the network 10.

FIG. 11A is a diagram illustrating an arrangement of the signals of respective operational channels 50 and the signals of respective adding-channels 60 in the transmission line between the optical transmission apparatus 200a and the optical transmission apparatus 200b of FIG. 10B.

FIG. 11B is a diagram illustrating an arrangement of the signals of respective operational channels 50 and the signals of respective adding-channels 60 in the transmission line between the optical transmission apparatus 200b and the optical transmission apparatus 200c of FIG. 10B.

FIG. 11C is a diagram illustrating an arrangement of the signals of respective operational channels 50 and the signals of respective adding-channels 60 in the transmission line between the optical transmission apparatus 200c and the optical transmission apparatus 200d of FIG. 10B. The operational channel 50e is regarded as being located in the same position of the operational channel 50c of FIG. 11A and FIG. 11B and not regarded as being a channel to pass through the transmission line between the same optical transmission apparatuses 200.

The operational channel 50c is terminated by the optical transmission apparatus 200c and thus, is not used after the optical transmission apparatus 200c. Accordingly, the operational channel 50e is able to be used in the same arrangement.

In a case where a plurality of signals of the adding-channels 60 exist as illustrated in FIGs. 10A and 10B and FIGs. 11A through 11C, the signal of the operational channel 50 influenced by respective signals of the adding-channel 60 is examined. For that reason, only one signal of the adding-channel 60 of the signals of the adding-channel 60 is transmitted and is subjected to examination whether the signal of the adding-channel 60 influences the respective signals of the operational channel 50.

For example, only the signal of the adding-channel 60a is transmitted together with the signal of the operational channel 50, the signal of the operational channel 50 which is influenced by the adding-channel 60a resulted in an increment of a predetermined value or more from the value such as the BER or OSNR of the received signal of the operational channel 50 is detected and is regarded as a measurement target channel.

Similarly, in the signal of the adding-channel 60b, a measurement target channel is detected from the operational channel 50 of which the transmission line is the same as a portion of the transmission line through which the adding-channel 60b passes.

When the measurement target channel is determined, an influence (BER, OSNR, or the like) on the signal of the operational channel by the signal of the adding-channel 60b is measured for each of the strengths of the signals of the adding-channel 60.

The influence (BER 55 or the like) exerted on the operational channel 50 by the adding-channel 60 is measured for each strength. When the measurement is completed, the strength of each adding-channel 60 is determined from the measured result.

Although an influence (BER 55 or the like) by each adding-channel 60 is measured after the signal of the operational channel 50 influenced by the signal of each adding-channel 60 is detected first, the influence may be detected and measured for each signal of the adding-channel 60.

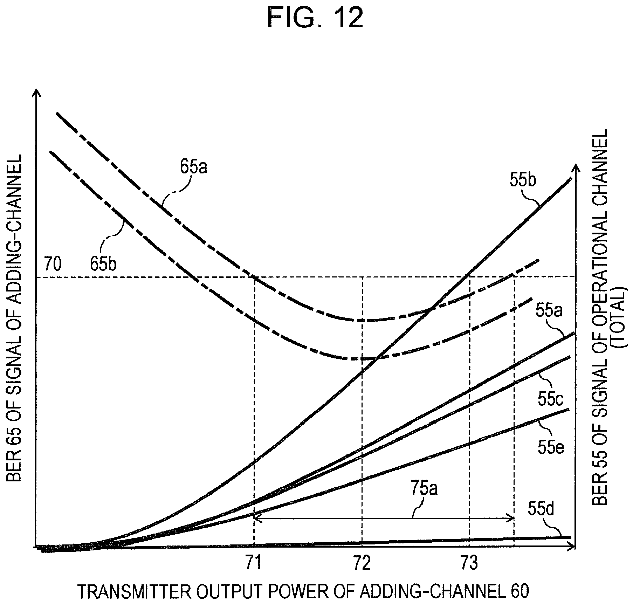

A method for setting a strength of the signal of the adding-channel 60 will be described with reference to FIG. 12.

FIG. 12 is an example illustrating a change of the BERs 55a, 55b, 55c, 55d, and 55e of the BER 55 corresponding to the signals of the operational channels 50a, 50b, 50c, 50d, and 50e and the BERs 65a and 65b of the BER 65 corresponding to the signals of the adding-channels 60a and 60b, accompanied by the change in the strength of the signal of the adding-channel 60. FIG. 12 illustrates a case where the strengths of the adding-channel 60 are the same. In the following, the BERs 55a, 55b, 55c, 55d, and 55e and the BERs 65a and 65b are simply denoted by the BER 55 and the BER 65, respectively, when the BERs are not distinguished, respectively.

The BER 55 is calculated based on the cumulated noise quantity resulted from the addition of the respective noise quantities obtained by calculating the influence on the signal of the operational channel 50 by the signal of the respective adding-channels 60.

For example, the noise quantity of the influence on the signal of the operational channel 50b by respective signals of the adding-channels 60 are cumulated and the OSNR or the like is able to be calculated.

Similar to Embodiment 1, the respective strengths 71, 72, and 73 are determined. The strength 71 is regarded as the minimum strength in which the BERs 65a and 65b become less than or equal to the allowable limit BER 70.

The strength 72 includes, for example, an average value of strengths which becomes the minimum value of each the respective BERs 65, the designated minimum value of the BER 65, the strength which is similar to any of the signals of the operational channel 50, or the like.

The setting of the signal strength of the adding-channel 60 is performed based on the strengths 71, 72, and 73.

As described above, when a plurality of channels to be operated are added in the network 10, the setting of strength for operating the signal of the adding-channel 60 becomes possible such that the signal of the operational channel 50 and the respective signals of the adding-channels 60 are received within the range which does not exceed a value such as a predetermined the BER or the like in consideration of the influence on the signal of the operational channel 50 by the plurality of signals of the adding-channels 60.

The noise quantity and the allowable limit strength are measured in advance so as to make it possible to cope with as quickly as possible in a case where input power to the transmission line is further desired after the adding-channel 60 is added.

When the channel is to be further added after adding the adding-channel 60, the strength is also able to be adjusted from the measured noise quantity.

Embodiment 3

In Embodiment 2, performing the measurement of the BER 55 or the like in a case where a plurality of signals of adding-channels 60 are not transmitted through the transmission line between the same optical transmission apparatuses 200 and setting of the signal strength of the adding-channel 60 have been described. In Embodiment 3, the description will be made on the setting of the strength in a case of a plurality of adding-channels 60 each of which the optical transmission apparatus 200 of the transmission source and the optical transmission apparatus 200 of the reception (termination) destination are the same.

In Embodiment 3, similar to Embodiment 1, the network 10, the network control apparatus 100, and the optical transmission apparatus 200 are used.

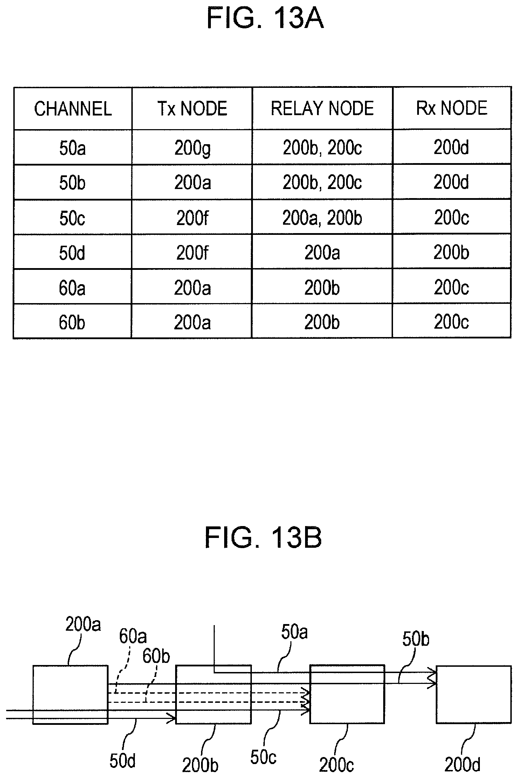

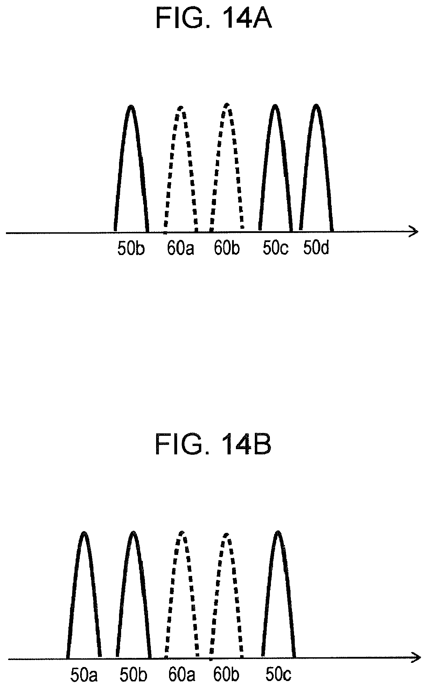

As an example of Embodiment 3, examples of the relationship between the operational channel 50 and the adding-channel 60 in a certain transmission line between the optical transmission apparatuses 200 are illustrated in FIGs. 13A and 13B and FIGs. 14A and 14B.

FIG. 13A is an example of a diagram in which an optical transmission apparatus 200 (Tx node), which transmits the signals of the operational channels 50a, 50b, 50c, and 50d and the signals of the adding-channels 60a and 60b which pass through any of a transmission line between the optical transmission apparatus 200a, the optical transmission apparatus 200b and a transmission line between the optical transmission apparatus 200b and the optical transmission apparatus 200c and a transmission line between the optical transmission apparatus 200c and the optical transmission apparatus 200d, an optical transmission apparatus 200 (relay node) which relays the signals, and a relay device 200 (Rx node) which receives (terminates) the signal in the network 10 are illustrated. The operational channels 50a, 50b, 50c, and 50d and the adding-channels 60a and 60b are simply denoted by an operational channel 50 and the adding-channel 60, respectively when not intended to discern the operational channels and the adding-channels, respectively.

FIG. 13B is a diagram illustrating a transmission line of respective signals of the operational channels 50 and respective signals of the adding-channels 60 in a state of FIG. 13A between the optical transmission apparatus 200a and the optical transmission apparatus 200d in the network 10.

FIG. 14A is a diagram illustrating an arrangement of the signals of respective operational channels 50 and the signals of respective adding-channels 60 in the transmission line between the optical transmission apparatus 200a and the optical transmission apparatus 200b of FIG. 13B.

FIG. 14B is a diagram illustrating an arrangement of the signals of respective operational channels 50 and the signals of respective adding-channels 60 in the transmission line between the optical transmission apparatus 200b and the optical transmission apparatus 200c of FIG. 13B.

Similar to Embodiment 2, in order to examine the signal of the operational channel 50 influenced by respective signals of the adding-channel 60, a signal is generated in only one of the adding-channel 60 and the signal is transmitted through the adding-channel 60, and is subjected to examination whether the signal of the adding-channel 60 influences the respective signals of the operational channel 50.

For example, only the signal of the adding-channel 60a is transmitted together with the signal of the operational channel 50, the signal of the operational channel 50 influenced by the adding-channel 60a resulted in an increment of a predetermined value or more from the value such as the BER or OSNR of the received signal of the operational channel 50 is detected and is regarded as a measurement target channel.

Similarly, the operational channel 50 influenced by the signal of the adding-channel 60b is detected.

As illustrated in Embodiment 3, in a case where the optical transmission apparatus 200 of the transmission destination and the optical transmission apparatus 200 of the reception (termination) destination are the same for a plurality of signals of the adding-channels 60, and further, the strengths of the signals of the adding-channels 60 are made equal, the adding-channels 60a and 60b may be collectively measured. For example, in a case where the strength of the signals of the adding-channels 60a and 60b are made equal by the same subcarriers, the signals of the adding-channels 60a and 60b may be collectively measured.

The signal of the adding-channel 60 is transmitted through the transmission line between the same optical transmission apparatuses 200 and thus, the signal of the adding-channel 60 may influence the signal of another adding-channel 60.

Accordingly, an influence in a case where the signal of the adding-channel 60 influences the signal of the other adding-channel 60 has to be taken into account and thus, for example, the signal of the adding-channel 60b is transmitted together with the signal of the adding-channel 60a at a certain strength when the signal of the adding-channel 60a is measured and the measurement of an influence on the signal of the adding-channel 60b by the signal of the adding-channel 60a and the calculation of the influence are performed simultaneously. For example, an increase or decrease of a noise quantity is calculated from the noise quantity for each strength based on the influence on the signal of the adding-channel 60a by the signal of the adding-channel 60b.

The measurement of an influence on the signal of the adding-channel 60 by the signal of another adding-channel 60 and the calculation of the influence may be performed separately from the measurement of an influence on the signal of the operational channel 50 by the adding-channel 60.

When the signal of the operational channel 50 and the signal of another adding-channel 60 influenced by the signal of the adding-channel 60 are determined, the influence on the signal of the operational channel 50 by the signal of the adding-channel 60 is measured and calculated for each strength of the signal of the adding-channel 60.

The influence exerted on the signal of operational channel 50 and the signal of another adding-channel 60 by the signal of the adding-channel 60 are measured and calculated for each strength. When the measurement and the calculation are completed, the strength of the signal of the adding-channel 60 is determined from the measured and calculated results.

Although the BER 55 or the like is measured after the signal of the operational channel 50 influenced by the signal of each adding-channel 60 is detected first, the influence may be detected, measured, and calculated for each signal of the adding-channel 60.

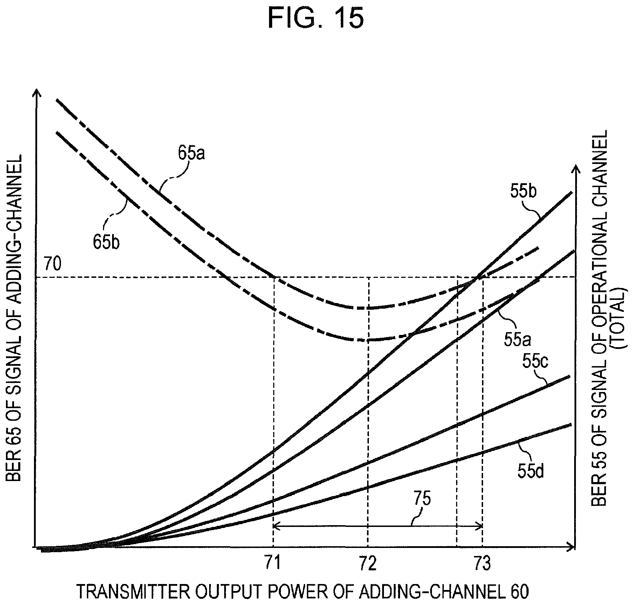

A method for setting a strength of the signal will be described with reference to FIG. 15.

FIG. 15 is an example illustrating a change of the BERs 55a, 55b, 55c, and 55d of the BER corresponding to the signals of the operational channels 50a, 50b, 50c, and 50d and the BERs 65a and 65b of the BER corresponding to the signals of the adding-channels 60a and 60b, accompanied by the change in the strength of the signal of the adding-channel 60. FIG. 15 illustrates a case where the strengths of the adding-channel 60 are the same. In the following, the BERs 55a, 55b, 55c, and 55d and the BERs 65a and 65b are simply denoted by the BER 55 and the BER 65, respectively, when the BERs are not distinguished, respectively.

The BER 55 is calculated based on the cumulated noise quantity resulted from the addition of the respective noise quantities obtained by calculating the influence on the signal of the operational channel 50 by the signal of the respective adding-channels 60. An influence of the signal of the another adding-channel 60 or the signal of the operational channel 50 is taken into account in the BER 65.

Similar to Embodiment 1, the respective strengths 71, 72, and 73 are determined. The strength 71 is regarded as the minimum strength in which the BERs 65a and 65b become less than or equal to the allowable limit BER 70.

The strength 72 includes, for example, an average value of strengths which become the minimum value of each the respective BERs 65, the minimum value of the BER 65 of the signals of the designated adding-channel 60, the strength which is similar to any of the signals of the operational channel 50, or the like.

The setting of the signal strength of the adding-channel 60 is performed based on the strengths 71, 72, and 73.

As described above, when a plurality of channels to be operated are added in the transmission line between the same optical transmission apparatuses 200 in the network 10, the setting of strength for operating the signal of the adding-channel 60 becomes possible such that the signal of the operational channel 50 and the respective signals of the adding-channels 60 are received within the range which does not exceed a value such as a predetermined the BER or the like in consideration of the influence on the signal of the operational channel 50 by the plurality of signals of the adding-channels 60.

The noise quantity and the allowable limit strength are measured in advance so as to make it possible to cope with as quickly as possible in a case where input power to the transmission line is further desired after the adding-channel 60 is added.

When the channel is to be further added after adding the adding-channel 60, the strength is also able to be adjusted from the measured noise quantity.

Embodiment 4

In Embodiment 3, the description has been made on the setting of the strength of the signal of the adding-channel 60 in a case where the optical transmission apparatus 200 of the transmission source and the optical transmission apparatus 200 of the reception (termination) destination are the same for a plurality of adding-channels 60. In Embodiment 4, description will be made a case where some of signals of the plurality of adding-channels 60, for which at least one of the optical transmission apparatus 200 of the transmission source and the optical transmission apparatus 200 of the reception (termination) destination is different, are transmitted through the transmission line between the same optical transmission apparatuses 200.

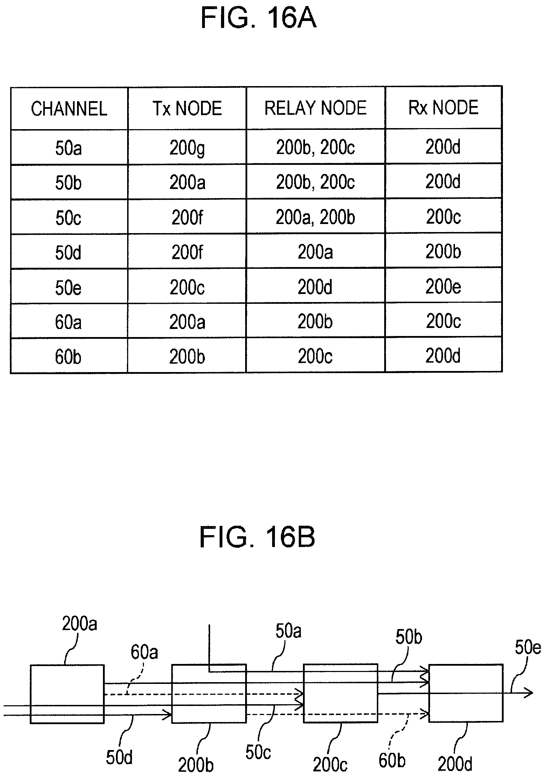

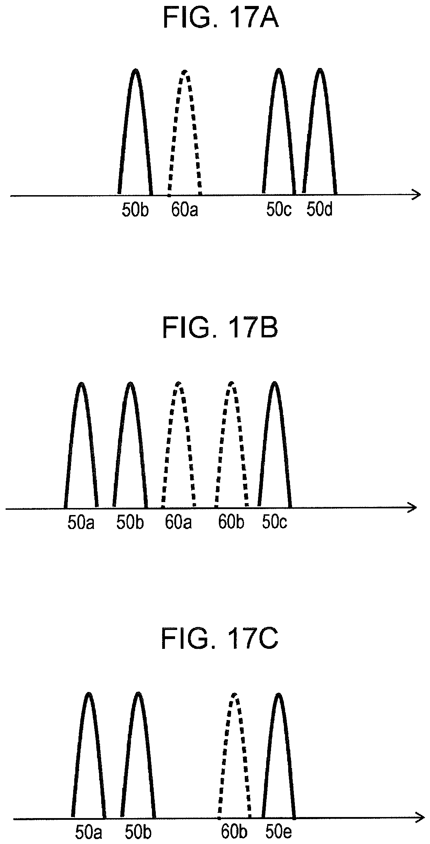

As an example of Embodiment 4, an example of a relationship between the operational channel 50 and the adding-channel 60 in a transmission line between certain optical transmission apparatuses 200 will be described using FIGs. 16A and 16B and FIGs. 17A through 17C. In FIGs. 16A and 16B and FIGs. 17A through 17C, an example in which the optical transmission apparatus 200 of the transmission source and the optical transmission apparatus 200 of the reception (termination) destination of the adding-channels 60a and 60b are different from each other is illustrated.

FIG. 16A is an example of a diagram in which an optical transmission apparatus 200 (Tx node), which transmits the signals of the operational channels 50a, 50b, 50c, 50d, and 50e and the signals of the adding-channels 60a and 60b which pass through any of a transmission line between the optical transmission apparatus 200a and the optical transmission apparatus 200b, a transmission line between the optical transmission apparatus 200b and the optical transmission apparatus 200c and a transmission line between the optical transmission apparatus 200c and the optical transmission apparatus 200d, an optical transmission apparatus 200 (relay node) which relays the signal, and a relay device 200 (Rx node) which receives (terminates) the signal in the network 10 are illustrated. The operational channels 50a, 50b, 50c, 50d, and 50e and the adding-channels 60a and 60b are simply denoted by an operational channel 50 and the adding-channel 60, respectively, when the operational channels and the adding-channels are not distinguished, respectively.

FIG. 16B is a diagram illustrating a transmission line of the signals of between the operational channel 50 and of the signals of the adding-channel 60 in a state of FIG. 16A between the optical transmission apparatus 200a and the optical transmission apparatus 200d in the network 10.

FIG. 17A is a diagram illustrating an arrangement of the signals of respective operational channels 50 and the signals of respective adding-channels 60 in the transmission line between the optical transmission apparatus 200a and the optical transmission apparatus 200b of FIG. 16B.

FIG. 17B is a diagram illustrating an arrangement of the signals of respective operational channels 50 and the signals of respective adding-channels 60 in the transmission line between the optical transmission apparatus 200b and the optical transmission apparatus 200c of FIG. 16B.

FIG. 17C is a diagram illustrating an arrangement of the signals of respective operational channels 50 and the signals of respective adding-channels 60 in the transmission line between the optical transmission apparatus 200c and the optical transmission apparatus 200d of FIG. 16B. The operational channel 50e is arranged in the same position as the operational channel 50c similar to Embodiment 2.

In Embodiment 4, similar to Embodiments 2 and 3, in order to examine the signal of the operational channel 50 influenced by respective signals of the adding-channel 60, only one signal of the adding-channel 60 of the signals of the adding-channel 60 is generated and transmitted and is subjected to examination of whether the signal of the adding-channel 60 influences the respective signals of the operational channel 50.

Similar to Embodiment 3, the signal of the adding-channel 60 may influence the signal of another adding-channel 60 and thus, it is also determined whether the signal of the adding-channel 60 may influence the signal of another adding-channel 60. For example, it is determined whether the signal of the adding-channel 60a influences the signal of the adding-channel 60b.

When the signal of the operational channel 50 and the signal of another adding-channel 60 influenced by the signal of the adding-channel 60 are determined, the strength of the signal of another adding-channel 60 is fixed and a measurement of the influence by the signal of the adding-channel 60 is performed for each strength.

When the measurement for respective adding-channels 60 is completed, the setting of strength is performed.

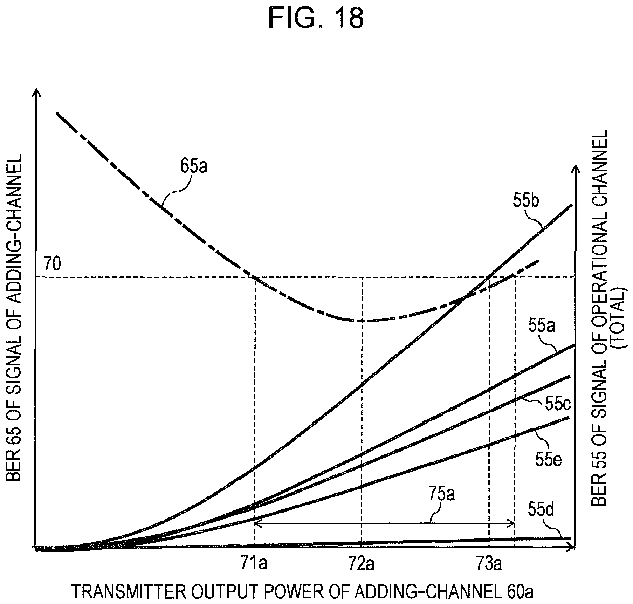

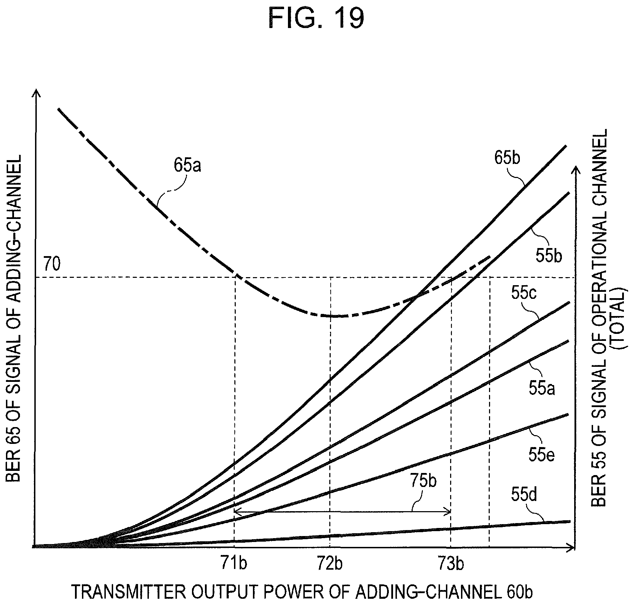

The strength setting may be performed in the same manner as described in Embodiments 2 and 3, in a case where the range 75 exists in the same strength. However, in a case where the channel is added as illustrated in FIGs. 16A and 16B and FIGs. 17A through 17C, the channel may not have the same range 75. A strength setting method of such case will be described using FIG. 18 and FIG. 19.

In FIG. 18 and FIG. 19, the strength setting is performed in order of the adding-channel 60a and the adding-channel 60b but is not limited thereto, and may be performed in order of the adding-channel 60b and the adding-channel 60a.

FIG. 18 is an example illustrating a change of the BERs 55a, 55b, 55c, 55d, and 55e of the BER corresponding to the signals of the operational channels 50a, 50b, 50c, 50d, and 50e and the BERs 65a the BER corresponding to the signal of the adding-channel 60a accompanied by the change in the strength of the signal of the adding-channel 60a. In the following, the BERs 55a, 55b, 55c, 55d, and 55e are simply denoted by the BER 55 when the BERs are not distinguished.

FIG. 19 is an example illustrating a change in the BER 55, the BER 65a, and the BER 65b, which is the BER corresponding to the signal of the adding-channel 60b, accompanied by the change in the strength of the signal of the adding-channel 60. In the following, the BERs 65a and 65b are simply denoted by the BER 65 when the BERs are not distinguished.

As illustrated in FIG. 18, the BER 65a and the BER 55 or the like are referenced to determine the strengths of the signal of the adding-channel 60 as strengths 71a, 72a, and 73a and determine the range as a range 75a by the method described in Embodiment 1, and the strength 72a is set to the strength of the signal of the adding-channel 60a. The strengths 71a, 72a, and 73a and the range 75a are the same meaning as the strengths 71, 72, and 73 and the range 75 of Embodiment 1.

After the strength of the adding-channel 60b is determined as the strength 72a, as illustrated in FIG. 19, the strengths of the signal of the adding-channel 60b are determined as the strengths strength 71b, 72b, and 73b and the range 75b by the similar method, and the strength 72b is set, for also the signal of the adding-channel 60b as the signal of the operational channel. The strengths 71b, 72b, and 73b and the range 75b are the same meaning as the strengths 71, 72, and 73 and the range 75 of Embodiment 1.

By setting the signal strength as described above, the optimal strength is able to be set for the signal of each adding-channel 60.

Although a strength setting method in a case where the signal of adding-channel 60 does not have the same range 75 is described, the signal strengths of the adding-channel 60 may be separately set even in a case where the signal of adding-channel 60 has the same range 75.

As described above, when a plurality of channels to be operated are added in the network, the setting of strength for operating the signal of the adding-channel 60 becomes possible such that the respective signals of the operational channels 50 and the respective signals of the adding-channels 60 are received within the range which does not exceed a value such as a predetermined the BER or the like in consideration of the influence on the signal of the operational channel 50 by the plurality of signals of the adding-channels 60.

The noise quantity and the allowable limit strength are measured in advance so as to make it possible to cope with as quickly as possible in a case where input strength is further desired after the adding-channel 60 is added.

When the channel is to be further added after adding the adding-channel 60, the strength is also able to be adjusted from the measured noise quantity.

Embodiment 5

In Embodiments 1 through 4, performing the measurement of the BER 55 and the BER 65 for a case where a modulation scheme of a test signal (probe light) for measurement is not changed and setting of the signal strength of the adding-channel 60 based on the measured result have been described. In Embodiment 5, the measurement of the strength limit value or the like of the test signal is performed by a plurality of modulation schemes in order to allow the modulation scheme of the signals of the adding-channel 60 to be changed after the addition.

In Embodiment 5, similar to Embodiment 1, the network 10 constituted with the network control apparatus 100 and the plurality of optical transmission apparatuses 200 is utilized.

When the adding-channel 60 is determined, the measurement of the signal by the modulation scheme likely to be used in the signal of the adding-channel 60 is performed.

The change of the modulation scheme is performed in such a way that for example, information about the modulation scheme is included in the control signal sent from the control section 130 of the network control apparatus 100 and sent to the optical transmission apparatus 200, and the optical signal generation section 280 changes the modulation scheme according to the control signal.

In the measurement method, when the measurement of the signal strength by a modulation scheme which is similar to Embodiments 1 through 4 is ended, the signal strength is measured by the next modulation scheme. For example, after the signal strength is measured in a case where the modulation scheme is the QPSK, 16 QAM signal is measured.

The noise quantity or the like accompanied by the change in the strength of the signal of the adding-channel 60 for each modulation scheme is stored in the network information management section 150.

As illustrated in Embodiments 3 and 4, in a case where the plurality of signals of the adding-channel 60 which pass through the transmission line, which is the same even as a portion of transmission line between the optical transmission apparatuses 200, the plurality of signals of the adding-channel 60 may be measured to correspond to respective patterns of the transmission line.

When the measurement by each modulation scheme is ended, the optimal strength may be output in each modulation scheme. In this case, the optimal strength is determined for each modulation scheme by the method used in Embodiments 1 through 4. When the modulation scheme is changed, the changed modulation scheme may be allowed to measure the optimal strength.

As described above, it is possible to cope with a change in the modulation scheme by measuring an influence by each modulation scheme even in a case where the modulation scheme is changed by an influence of an amount of information.

In a case where the modulation scheme is changed, the signal of the operational channel 50 is able to be communicated without using the signal of the adding-channel 60, which is the most influencing signal, and thus the transmission capacity is able to be increased.

For example, in a case where three signals of the adding-channel 60, of which the optical transmission apparatus 200 of the transmission destination and the optical transmission apparatus 200 of the reception (termination) destination are the same, are subjected to the QPSK modulation, one signal is not used and other two signals are modulated to 16 QAM signals so as to increase the transmission capacity.

Embodiment 6

In Embodiment 5, the measurement method, which corresponds to the change in the modulation scheme after the addition of channel, for the signal of the adding-channel 60 is described. In Embodiment 6, a measurement method capable of corresponding to the change in the modulation scheme in the signal of the operational channel 50 will be described.

In Embodiment 6, similar to Embodiments 1 and 5, the network 10 constituted with the network control apparatus 100 and the plurality of optical transmission apparatuses 200 is utilized.

When the adding-channel 60 is determined, the measurement of the signal by the modulation scheme likely to be used in the signal of the operational channel 50 influenced by the adding-channel 60 is performed.

The change of the modulation scheme is performed in such a way that for example, information about the modulation scheme is included in the control signal sent from the control section 130 and sent to the optical transmission apparatus 200 and the optical transmission apparatus 200, which is the transmission source of the signal of the operational channel 50, changes the modulation scheme according to the control signal in the optical signal generation section 280.

In the measurement method, when the measurement of the signal strength by a modulation scheme, which is similar to Embodiments 1 through 4, for the signal of the operational channel 50 is ended, the signal strength is measured by the next modulation scheme. For each strength of the signal of the adding-channel 60, the signals of the operational channel 50, of which the number amounts to the modulation schemes used for the signal measurement, may be measured.

The noise quantity or the like of the signal of the operational channel 50 accompanied by the change in the strength of the signal of the adding-channel 60 for each modulation scheme is stored in the network information management section 150.

When the measurement by each modulation scheme for the signal of the operational channel 50 is ended, the optimal strength may be output in each modulation scheme. In this case, the optimal strength is determined for each modulation scheme by the method used in Embodiments 1 through 4. When a modulation scheme is changed, the optimal strength for the changed modulation scheme may be measured.

As described above, it is possible to cope with a change in the modulation scheme by measuring an influence by each modulation scheme even in a case where the modulation scheme is changed.

It is possible to cope with the change of the modulation scheme of the signal of the operational channel 50 for each modulation scheme in accordance with the change of the modulation scheme of the signal of the adding-channel 60 described in Embodiment 5. As described above, although the most desirable embodiment or the like in terms of the optical transmission system of the network is described, it is needless to say that the present disclosure is not limited thereto and various modifications and alterations may be made by an ordinary skilled person in the art based on the gist of the disclosure described in the claims or disclosed in the embodiments and these modifications and alterations are included in the scope of the present disclosure.

**Claims**

1. An optical transmission system, comprising:

    an optical network configured to include a first optical transmission apparatus including first transmitter and first receiver, a second optical transmission apparatus including a second transmitter and a second receiver, a third optical transmission apparatus including a third transmitter and a third receiver, and a network control apparatus including a fourth transmitter, wherein
    the first transmitter is configured to transmit a signal of a first channel to a second receiver at a first strength;
    the second transmitter is configured to transmit first information about a signal quality of the signal of the first channel terminated by the second receiver to the network control apparatus;
    the third receiver is configured to terminate a signal of a second channel, which passes through at least a portion of an optical transmission line through which the signal of the first channel passes;
    the third transmitter is configured to transmit second information about the terminated signal of the second channel to the network control apparatus;
    the fourth transmitter is configured to transmit information about a second strength, which is an output strength of the signal of the first channel, based on the first information and the second information, to the first optical transmission apparatus; and
    the first transmitter is configured to transmit a signal of the first channel at the second strength.

2. The optical transmission system according to claim 1,
   wherein the fourth transmitter is configured to notify the first optical transmission apparatus of the first strength, when a second signal quality included in the second information measured by the third optical transmission apparatus does not exceed a predetermined signal quality when transmitting at the first strength, notify the first optical transmission apparatus of a third strength which is increased from the first strength, and when the measured second signal quality exceeds the predetermined signal quality when transmitting at the first strength, obtain an upper limit strength based on the measured second signal quality and the first quality information included in the first information, and set the second strength to a strength within the upper limit strength.

3. The optical transmission system according to claim 1 or 2,
   wherein the network control apparatus is configured to notify the first optical transmission apparatus of information about a modulation scheme together with the strength when notifying the first optical transmission apparatus of the strength.

4. The optical transmission system according to claim 3,
   wherein the network control apparatus is configured to

    accumulate the first signal quality and the second signal quality corresponding to each of a plurality of modulation schemes, and
    when the modulation scheme is changed, set the second strength based on the first signal quality and the second signal quality corresponding to the modulation scheme to be changed.

5. The optical transmission system according to any one of claims 1 through 4,
   wherein the network control apparatus is configured to transmit a control signal to the second optical transmission apparatus and the third optical transmission apparatus to measure a signal quality of a signal of a specific channel, wherein the second transmitter is configured to transmit the first quality information based on the control signal, and wherein the third transmitter is configured to transmit the second quality information based on the control signal.

6. The optical transmission system according to claim 1,
wherein the signal of the first channel is a signal of a channel to be added to the transmission line between the first optical transmission apparatus and the second optical transmission apparatus in the network.

7. The optical transmission system according to claim 1,
wherein a fourth transmitter is configured to transmit a signal of a third channel to a fifth optical transmission apparatus of the plurality of optical transmission apparatuses at a fourth strength,
wherein the fifth optical transmission apparatus is configured to transmit third information about a signal quality of the terminated signal of the third channel at the fourth strength to the network control apparatus,
wherein a sixth optical transmission apparatus of the plurality of optical transmission apparatuses is configured to terminate a signal of a fourth channel, which passes through at least a portion of the transmission line through which the signal of the first channel passes and transmit fourth information about the terminated signal of the fourth channel to the network control apparatus,
wherein the network control apparatus is configured to transmit information about a fifth strength, which is an output strength of the signal of the third channel based on the third information and the fourth information, to the fourth optical transmission apparatus, and
wherein the fourth optical transmission apparatus is configured to transmit the signal of the third channel at the fifth strength.

8. The optical transmission system according to claim 7,
wherein the network control apparatus is configured to notify the fourth optical transmission apparatus of information about the signal of the third channel to after the first signal quality and the second quality information are received.

9. An optical transmission apparatus, comprising:

a first optical transmission line through which the signal of the first channel pass, the signal having a signal quality at a first strength and;
an optical receiver configured to receive, from a network control apparatus, information about a second strength based on a signal quality of a signal of a second channel passing through a second optical transmission line of which at least a portion is a same as that of the signal of the first channel; and
an optical transmitter configured to transmit the signal of the first channel at the second strength.

10. A network control method, comprising:

receiving first information about a signal quality obtained by measuring a signal of a first channel transmitted at a first strength;
receiving, from a second optical transmission apparatus of a plurality of optical transmission apparatuses, second information about a signal quality of a signal of a second channel, which passes through a first transmission line of which at least a portion is a same as a second transmission line through which the signal of the first channel passes, from a first optical transmission apparatus of the plurality of optical transmission apparatuses; and
transmitting information about a second strength based on the first information and the second information to the first optical transmission apparatus.

# FIG. 1

FIG. 2

## FIG. 3

FIG. 4

RECEIVE CONTROL SIGNAL

CONTROL TRANSMISSION
SIGNAL — S10

YES

NO

SELECT CHANNEL
TO BE MEASURED — S11

RECEIVE SIGNAL
FROM ANOTHER NODE — S12

NO

YES

OBTAIN SIGNAL CHARACTERISTICS
OF MEASUREMENT TARGET CHANNEL — S13

TRANSMIT SIGNAL
CHARACTERISTICS — S14

END

IS CONTROL FOR
ADDING-CHANNEL? — S15

NO

YES

GENERATE
ADDING-CHANNEL — S16

IS CONTROL FOR
OPERATIONAL CHANNEL? — S17

YES

NO

CONTROL OPERATIONAL
CHANNEL — S18

MULTIPLEX SIGNALS
OF CHANNELS — S19

## FIG. 5A

| CHANNEL | Tx NODE | RELAY NODE | Rx NODE |
|---------|---------|------------|---------|
| 50a | 200g | 200b, 200c | 200d |
| 50b | 200a | 200b, 200c | 200d |
| 50c | 200f | 200a, 200b | 200c |
| 50d | 200f | 200a | 200b |
| 60 | 200a | 200b | 200c |

## FIG. 5B

## FIG. 6A

50b  60      50c  50d

## FIG. 6B

50a  50b  60      50c

## FIG. 7A

50b     50c

50a     60     50d

## FIG. 7B

50b     50c

50a     60     50d

## FIG. 7C

50b     50c

50a     60     50d

## FIG. 7D

BER

55a    55b    55c    55d    70

FREQUENCY

## FIG. 7E

BER

55a    55b    55c    55d    70

FREQUENCY

## FIG. 7F

BER

55b    55a    55c    55d    70

FREQUENCY

# FIG. 8

# FIG. 9

```
                    ┌──────────┐
                    │  START   │
                    └──────────┘
                         │
                         ▼                          S30
        ╱────────────────────────────────╲  NO
       ⟨  STRENGTH 73 > STRENGTH 71?       ⟩──────────────────────────────┐
        ╲────────────────────────────────╱                               │
                         │ YES                                            │
                         ▼                          S31                   │
        ╱────────────────────────────────╲  NO                           │
       ⟨  STRENGTH 72 > STRENGTH 73?       ⟩──────────────┐               │
        ╲────────────────────────────────╱               │               │
                         │ YES         S32               S33             S34
                         ▼                                ▼               ▼
        ┌──────────────────────┐   ┌──────────────────────┐   ┌──────────────────────┐
        │    SET STRENGTH      │   │    SET STRENGTH      │   │   CHANGE SETTINGS    │
        │ OF ADDING-CHANNEL    │   │ OF ADDING-CHANNEL    │   │ OF ADDING-CHANNEL    │
        │   AS STRENGTH 73     │   │   AS STRENGTH 72     │   │                      │
        └──────────────────────┘   └──────────────────────┘   └──────────────────────┘
                         │                    │                          │
                         ▼◄───────────────────┘──────────────────────────┘
                    ┌──────────┐
                    │   END    │
                    └──────────┘
```

# FIG. 10A

| CHANNEL | Tx NODE | RELAY NODE | Rx NODE |
|---------|---------|------------|---------|
| 50a | 200g | 200b, 200c | 200d |
| 50b | 200a | 200b, 200c | 200d |
| 50c | 200f | 200a, 200b | 200c |
| 50d | 200f | 200a | 200b |
| 50e | 200c | 200d | 200e |
| 60a | 200a | 200b | 200c |
| 60b | 200c | × | 200d |

# FIG. 10B

## FIG. 11A

50b  60a    50c  50d

## FIG. 11B

50a  50b  60a    50c

## FIG. 11C

50a  50b    60b  50e

# FIG. 12

# FIG. 13A

| CHANNEL | Tx NODE | RELAY NODE | Rx NODE |
|---------|---------|------------|---------|
| 50a | 200g | 200b, 200c | 200d |
| 50b | 200a | 200b, 200c | 200d |
| 50c | 200f | 200a, 200b | 200c |
| 50d | 200f | 200a | 200b |
| 60a | 200a | 200b | 200c |
| 60b | 200a | 200b | 200c |

# FIG. 13B

FIG. 14A

50b    60a    60b    50c   50d

FIG. 14B

50a    50b    60a    60b    50c

# FIG. 15

# FIG. 16A

| CHANNEL | Tx NODE | RELAY NODE | Rx NODE |
|---------|---------|------------|---------|
| 50a | 200g | 200b, 200c | 200d |
| 50b | 200a | 200b, 200c | 200d |
| 50c | 200f | 200a, 200b | 200c |
| 50d | 200f | 200a | 200b |
| 50e | 200c | 200d | 200e |
| 60a | 200a | 200b | 200c |
| 60b | 200b | 200c | 200d |

# FIG. 16B

# FIG. 17A

50b　60a　50c　50d

# FIG. 17B

50a　50b　60a　60b　50c

# FIG. 17C

50a　50b　60b　50e

# FIG. 18

# FIG. 19

Europäisches
Patentamt

European
Patent Office

Office européen
des brevets

# EUROPEAN SEARCH REPORT

Application Number

EP 16 19 7930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 924 891 A1 (HUAWEI TECH CO LTD [CN]) 30 September 2015 (2015-09-30) <br> * paragraph [0031] - paragraph [0035]; figure 3 * <br> * paragraph [0038] * <br> ----- | 1-10 | INV. <br> H04B10/079 <br> H04J14/02 |
| A | US 6 871 020 B1 (BORODITSKY MIKHAIL [US] ET AL) 22 March 2005 (2005-03-22) <br> * column 3, line 42 - line 56 * <br> * column 6, line 33 - line 39 * <br> * column 7, line 13 - line 24 * <br> ----- | 1-10 | |
| A | US 2013/243424 A1 (SHUKUNAMI NORIFUMI [JP]) 19 September 2013 (2013-09-19) <br> * paragraph [0081] - paragraph [0087] * <br> ----- | 1-10 | |
| | | | TECHNICAL FIELDS SEARCHED (IPC) <br><br> H04B <br> H04J |

The present search report has been drawn up for all claims

| Place of search | Date of completion of the search | Examiner |
|---|---|---|
| Munich | 17 March 2017 | Borsier, Celine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 19 7930

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2017

| Patent document cited in search report | | | Publication date | Patent family member(s) | | | Publication date |
|---|---|---|---|---|---|---|---|
| EP 2924891 | | A1 | 30-09-2015 | CN | 103222215 | A | 24-07-2013 |
| | | | | EP | 2924891 | A1 | 30-09-2015 |
| | | | | WO | 2014086044 | A1 | 12-06-2014 |
| US 6871020 | | B1 | 22-03-2005 | CA | 2374855 | A1 | 03-10-2002 |
| | | | | CA | 2666046 | A1 | 03-10-2002 |
| | | | | US | 6871020 | B1 | 22-03-2005 |
| US 2013243424 | | A1 | 19-09-2013 | JP | 2013197804 | A | 30-09-2013 |
| | | | | US | 2013243424 | A1 | 19-09-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001 A

- JP 244900 A